Europäisches Patentamt

European Patent Office

Office européen des brevets

(19)

(11) Publication number: 0 284 266
A2

(12) # EUROPEAN PATENT APPLICATION

(21) Application number: 88302209.7

(22) Date of filing: 14.03.88

(51) Int. Cl.⁴: H04N 7/13 , H04N 7/087

(30) Priority: 26.03.87 GB 8707274

(43) Date of publication of application:
28.09.88 Bulletin 88/39

(84) Designated Contracting States:
AT BE CH DE ES FR GR IT LI LU NL SE

(71) Applicant: BRITISH BROADCASTING
CORPORATION
Broadcasting House
London W1A 1AA(GB)

(72) Inventor: Wells, Nicholas Dominic
211, Queens Park Road
Brighton Sussex, BN2 2ZA(GB)
Inventor: Knee, Michael James
Flat, 2, 92 Nightingale Road
Guildford Surrey, GU1 1EP(GB)
Inventor: Jones, Arthur Howard
17, Masons Field Mannings Heath
Horsham, West Sussex, RH13 6JP(GB)
Inventor: Sandbank, Charles Peter
30, Beech Road
Reigate Surrey, RH2 9NA(GB)

(74) Representative: Abnett, Richard Charles et al
REDDIE & GROSE 16 Theobalds Road
London WC1X 8PL(GB)

(54) Improvements in television.

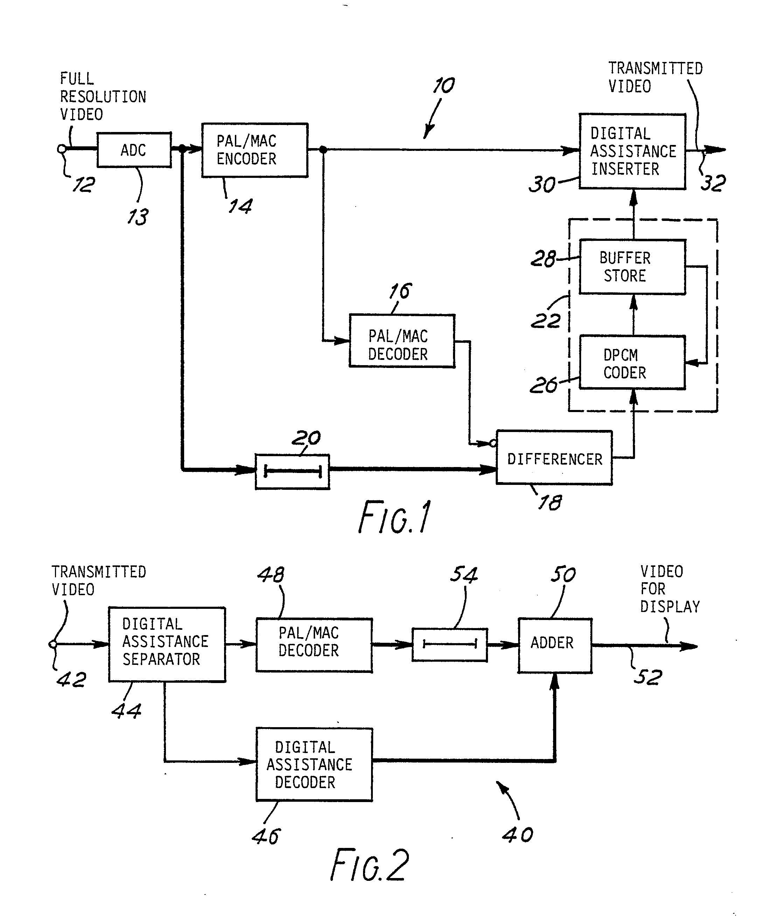

(57) A television transmitter includes in addition to a PAL or MAC encoder (14) a corresponding decoder (16) and a differencer (18) which compares the decoded signal and the full resolution input signal. The output of the differencer, representing coding/decoding impairments, is digitally coded (22) and inserted (30) in the line or field blanking intervals of the encoded signal as digital assistance information. A suitably-equipped receiver (20, Figure 2) can add the decoded difference information to the conventionally-decoded signal to improve picture quality.

Fig.1

# IMPROVEMENTS IN TELEVISION

This invention relates to improvements in the transmission of television signals.

It has been proposed in, for example, the MAC television system to transmit additional digital information in the line and/or field blanking intervals of a television signal. This digital information may, for example, be used to convey additional sound or data channels, or to carry additional picture information enabling a wide aspect ratio display.

The invention is defined in the appended claims to which reference should now be made.

An embodiment of the invention will now be described by way of example with reference to the drawing, in which:-

Figure 1 is a block schematic diagram of a television transmitter in accordance with the invention; and

Figure 2 is a block schematic diagram of a receiver in accordance with the invention for use with the transmitter of Figure 1.

The transmitter of Figure 1 is designed for use with a television system of a type which enables digital data to be transmitted as part of the signal multiplex. Examples of such a system are the MAC system which permits transmission of digital data in packets during non-active video portions of each video line, or the PAL or NTSC systems in which there are unused lines in each field blanking interval which can be used to carry digital data.

Referring to Figure 1, the transmitter 10 shown receives at an input 12 full resolution analogue video, typically in the form of luminance and colour-difference signals Y,U,V or Y,I,Q. These are applied through an analogue to digital converter (ADC) 13 to an encoder 14 which filters and combines the signals as appropriate for the transmission standard being used. A single encoded output signal is obtained which in a conventional transmitter is transmitted to the receivers.

However, in the transmitter of Figure 1 the output of the encoder 14 is applied to a decoder 16 which is a typical standard decoder as will be found in a normal good quality receiver. The luminance/chrominance output of the decoder 16 is thus the signal that would be decoded in a receiver (in the absence of any transmission impairments). This decoded signal is now compared in a differencer circuit 18 with the original full resolution video signal as supplied by ADC 13. A delay device 20 is provided to compensate for the delay introduced by the encoder 14 and decoder 16.

The output of the differencer circuit 18 thus represents the impairments introduced by the coding/decoding operation.

The output of the differencer circuit 18 is now added to the encoded video output of the encoder as digital assistance information in circuitry 22, which codes the difference signal as accurately as possible within the available bit rate. The digital signal coder circuitry 22 includes a PCM or preferably DPCM coder 26. The DPCM coder has relatively coarse levels and in addition provides a form of run length coding of the zeros or other variable length coding. This gives a variable bit rate per frame and a buffer store 28 is used to average out the variable data rate. The buffer store has a feedback path to the DPCM coder 26 to control the mean rate at which data is generated to match the available capacity. Finally, the output of the buffer store 28 is applied to a digital assistance inserter circuit 30 which inserts the digital data in the appropriate part of the signal, i.e. the designated line blanking interval portions in the MAC system or the free lines in the vertical blanking interval in the PAL or NTSC systems. The resultant thus-modified signal from the inserter circuit 30 is applied to the transmitter output 32 for broadcast transmission.

In order that no digital capacity is wasted in inactive regions of the picture the picture may be split into several different regions. If a region is wholly inactive then all that needs to be transmitted is a single code indicating this fact.

At the receiver 40 shown in Figure 2 the transmitted signal received at an input 42 corresponds to that transmitted at the transmitter. A digital assistance separator circuit 44 separates the digital assistance information, which it applies to digital signal decoder circuitry 46, from the active video signal, which it applies to a PAL or MAC decoder 48. The digital signal decoder circuitry 46 provides the inverse function to that provided by the coding circuitry 22 at the transmitter and is not described in detail. The output of the decoder circuitry 46 is added to the video output of the decoder 44 in an adding circuit 50 to provide the video signal for display at an output 52. Appropriate compensating delays are provided such as the delay 54.

Thus a receiver which is specially equipped in this way can decode the digital information to assist in the reconstruction of an improved resolution picture. Nevertheless, a receiver without the additional circuitry will still be able to display the same picture as before so that compatibility is retained to this extent.

In an alternative arrangement for the digital signal coder circuitry 22 at the transmitter, rather than using a buffer store and a variable data rate, each complete video frame or portion of a frame can first be coded before transmission, and then only the most detailed or impaired parts of the frame (or frame portion) are coded for transmission, to give a fixed data rate per frame (or frame portion). This is effectively a "two-pass" type of system.

In a modification of the circuit the output of the differencer circuit 18 is not directly coded for transmission, but instead is analysed to determine the type of picture feature being transmitted. When this is determined, a code may be transmitted as the digital assistance information indicative of this picture feature. At a receiver, this code is detected and used to select one of a number of stored algorithms for improving the presentation of the picture feature.

For example, the output of the differencer 18 can be analysed to look for edges between elements of a scene. An appropriate one of a range of edge-sharpening algorithms can then be chosen to improve the sharpness of the edge. A code incidating this particular algorithm is then transmitted and will be detected by an appropriately modified receiver which includes a memory containing details of the range of algorithms. The appropriate algorithm is selected and applied to the received signal.

The techniques described could have application to various forms of enhancement at the receiver including in particular the following:

(1) Enhancing vertical resolution, e.g.

    a) for 625-line to 1250-line up conversion

    b) for improved vertical chrominance resolution for

line sequential colour systems.

(2) Enhancing horizontal resolution, e.g.

    a) Improved luminance resolution

    b) Improved chrominance resolution.

(3) Enhancing horizontal and vertical resolution.

(4) Removing cross-colour and cross-luminance artifacts in PAL decoders.

In any event the system illustrated enables an improvement to be made to the quality of the displayed picture. One advantage is that improvements in the enhancement techniques, e.g. the detection of picture edges, can be made at the transmitter without the need to alter the receivers.

## Claims

1. A television transmitter comprising an input for receiving a full-resolution video signal, and a transmission-standard encoder coupled to the input to provide an encoded signal, characterised by a transmission-standard decoder (16) coupled to the encoder (14) to receive the encoded signal and provide a decoded signal, differencing means (18) coupled to the input and to the output of the decoder to receive and compare the full-resolution input signal and the decoded signal, signal processing means (22) coupled to the output of the differencing means for generating a digital signal in response to the output of the differencing means, and inserting means (30) coupled to the outputs of the encoder and the signal processing means to insert the digital signal in the encoded signal to provide an output signal (32) for transmission.

2. A transmitter according to claim 1, in which the signal processing means comprises a DPCM encoder (26).

3. A transmitter according to claim 2, in which the DPCM encoder provides run-length or variable-length coding, and including a buffer store (28) coupled to the output of the DPCM encoder with feedback control to the DPCM encoder.

4. A transmitter according to claim 1, in which the signal processing means comprises means for detecting predetermined picture features in the signal, and for generating as the said digital signal a signal indicative of the detected picture feature.

5. A television receiver for receiving a signal from a transmitter in accordance with claim 1, comprising an input for receiving the transmitted signal, and a transmission-standard decoder for providing a decoded signal from the received encoded signal, charactered by an adder (50) having a first input coupled to the decoder (48) and providing an output for display, a separator circuit (44) coupled to the input (42) to separate out a digital signal in the received signal, and signal processing means (46) coupled to the output of the separator circuit for decoding the digital signal and supplying the resultant to a second input of the adder.

0 284 266

FULL
RESOLUTION
VIDEO

ADC

*12*

*13*

PAL/MAC
ENCODER

*14*

*10*

TRANSMITTED
VIDEO

DIGITAL
ASSISTANCE
INSERTER

*30*

*32*

PAL/MAC
DECODER

*16*

*20*

DIFFERENCER

*18*

BUFFER
STORE

*28*

*22*

DPCM
CODER

*26*

*FIG.1*

TRANSMITTED
VIDEO

DIGITAL
ASSISTANCE
SEPARATOR

*42*

*44*

*48*

PAL/MAC
DECODER

*54*

*50*

ADDER

VIDEO
FOR
DISPLAY

*52*

DIGITAL
ASSISTANCE
DECODER

*46*

*40*

*FIG.2*